(19) Europäisches Patentamt
European Patent Office
Office européen des brevets

(11) **EP 3 943 899 A1**

(12) **EUROPEAN PATENT APPLICATION**

(43) Date of publication:
**26.01.2022 Bulletin 2022/04**

(21) Application number: **20187056.5**

(22) Date of filing: **21.07.2020**

(51) International Patent Classification (IPC):
**G01J 3/02** (2006.01)

(52) Cooperative Patent Classification (CPC):
**G01J 3/2823; G01B 9/02041; G01B 9/02044;
G01B 9/02087; G01B 9/02091; G01J 3/0224;
G01J 3/0229; G01J 3/4531;** G01B 2290/70

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
• **YUAN, Xin
New Providence, NJ 07974 (US)**
• **QIAO, Mu
Summit, NJ 07901 (US)**
• **LIU, Xuan
Berkeley Heights, NJ 07922 (US)**

(74) Representative: **Swindell & Pearson Limited
48 Friar Gate
Derby DE1 1GY (GB)**

(54) **APPARATUS, SYSTEMS FOR DETECTING LIGHT**

(57)    An apparatus comprising:
spatial modulating means for spatially modulating a beam of light to produce a spatially modulated beam of light;
a dispersing element configured to disperse the modulated beam of light, in a dispersion direction, to produce a spatially modulated and dispersed beam of light;
polarization-sensitive displacement element configured to provide a polarization dependent displacement of the dispersed beam of light in a direction that has at least a component orthogonal to the dispersion direction; and
a detector configured to detect the spatially modulated, dispersed and displaced beam of light.

Fig. 3

EP 3 943 899 A1

**Description**

TECHNOLOGICAL FIELD

Examples of the disclosure relate to apparatus and systems for detecting light. In particular some examples relate to apparatus and systems for detecting light that has been subjected to compressive sensing.

BACKGROUND

According to the theory of compressive sensing, traditional sampling is replaced by measurements of inner products with random vectors.

Light modulated by reflection from or transmission through an object, when detected directly by a two-dimensional pixelated detector, is an oversampled field that has a sparser representation in some domain. As a consequence, detecting spectrally dispersed coded fields (sparse incoherent fields rather than the whole field) can capture sufficient information to characterise the object. For example, spectral images of the object can be determined from the detected spectrally dispersed coded fields.

BRIEF SUMMARY

According to various, but not necessarily all, embodiments of the invention there is provided an apparatus comprising:

spatial modulating means for spatially modulating a beam of light to produce a spatially modulated beam of light;
a dispersing element configured to disperse the modulated beam of light, in a dispersion direction, to produce a spatially modulated and dispersed beam of light; polarization-sensitive displacement element configured to provide a polarization dependent displacement of the dispersed beam of light in a direction that has at least a component orthogonal to the dispersion direction; and
a detector configured to detect the spatially modulated, dispersed and displaced beam of light.

In some but not necessarily all examples, the polarization-sensitive displacement element is configured to provide polarization dependent displacement of the dispersed beam of light in a direction orthogonal to the dispersion direction.

In some but not necessarily all examples, the polarization-sensitive displacement element is a single polarization-sensitive displacement element configured to provide polarization dependent displacement of the dispersed beam of light in a direction that has at least a component orthogonal to the dispersion direction.

In some but not necessarily all examples, the polarization-sensitive displacement element is configured to cause a relative displacement of orthogonal linear polarization states of the dispersed beam of light in the displacement direction, the relative displacement having at least a component orthogonal to the dispersion direction.

In some but not necessarily all examples, the relative displacement in a direction orthogonal to the dispersion direction is, at the detector, at least a pixel spacing of the detector in the direction orthogonal to the dispersion direction.

In some but not necessarily all examples, the polarization-sensitive displacement element is configured to cause, for one linear polarization state but not another orthogonal linear polarization state, displacement of the dispersed beam of light in a direction that has at least a component orthogonal to the dispersion direction.

In some but not necessarily all examples, the polarization-sensitive displacement element is positioned between the dispersing element and the detector.

In some but not necessarily all examples, the polarization-sensitive displacement element comprises a birefringent crystal.

In some but not necessarily all examples, the dispersion direction is aligned with rows or columns of pixels in the detector and/or the dispersion direction is aligned with rows or columns of modulating pixels in the spatial modulating means.

the dispersing element comprises one or more refractive elements or one or more diffractive elements.

In some but not necessarily all examples, the spatial modulating means comprises a two-dimensional spatially coded aperture comprising at least a first plurality of portions, having a first transparency, and at least a second plurality of portions, having a second different transparency, wherein the first plurality of portions and the second plurality of portions are spatially distributed in two dimensions.

In some but not necessarily all examples, the first portions and the second portions are arranged in an array of non-overlapping pixelated portions and are arranged in rows and columns.

In some but not necessarily all examples, the apparatus comprises

a broadband light source for providing, during measurement, a broadband beam of light;

a linear polarizer for polarizing the broadband bean of light source to provide a beam of light for illuminating an object;

a double path interferometer comprising, for the beam of light, a sample path to via the object and a reference path;

means for superposing a portion of the beam of light from the sample path and a portion of the beam of light from the reference path to create the beam of light for spatial modulation.

In some but not necessarily all examples, a system can comprise the apparatus.

In some but not necessarily all examples, the system or the apparatus further comprises processing means for processing output of the detector to produce a three-dimensional image of the object.

According to various, but not necessarily all, embodiments of the invention there is provided a computer program that when loaded into a computer controls an apparatus comprising:

spatial modulating means for spatially modulating a beam of light to produce a spatially modulated beam of light;

a dispersing element configured to disperse the modulated beam of light, in a dispersion direction, to produce a spatially modulated and dispersed beam of light;

and polarization-sensitive displacement element that provides a polarization dependent displacement of the dispersed beam of light in a direction that has at least a component orthogonal to the dispersion direction

a detector configured to detect the spatially modulated, dispersed and displaced beam of light,

wherein the computer program is configured to cause variation in one or more of the spatial modulating means, the dispersing element and the polarization sensitive displacement element.

According to various, but not necessarily all, embodiments of the invention there is provided an apparatus comprising:

a coded aperture configured to spatially modulating a beam of light to produce a spatially modulated beam of light

one or more dispersing elements configured to disperse the spatially modulated beam of light, in a dispersion direction, to produce a spatially modulated dispersed beam of light;

and polarization-sensitive displacement means that provides a polarization dependent displacement of the dispersed beam of light in a direction that has at least a component orthogonal to the dispersion direction

a detector configured to detect the spatially modulated, dispersed and displaced beam of light.

According to various, but not necessarily all, embodiments of the invention there is provided examples as claimed in the appended claims.

BRIEF DESCRIPTION

For a better understanding of various examples that are useful for understanding the detailed description, reference will now be made by way of example only to the accompanying drawings in which:

Fig. 1 illustrates an example apparatus for measurement and for calibration;
Fig. 2 shows the compressive sensing principle of examples of the disclosure; and
Fig. 3 illustrates an optical coherence tomography arrangement for measurement.

DETAILED DESCRIPTION

Examples of the disclosure relate to an apparatus 1 which performs compressive sensing (compressive sampling) using spatial modulating means 3 for spatially modulating a beam of light 9, dispersing element 5 for dispersing the spatially modulated beam of light 11, polarization-sensitive displacement means 14 for providing a polarization dependent displacement of the spatially modulated dispersed beam of light 13; and detector 7 for detecting the spatially modulated, dispersed and displaced beam of light 15.

The beam of light 9 can, for example, arrive from any suitable source 17.

The beam of light 9 can, for example, comprise light that has been linearly polarized and then reflected from or that has passed through a scene or an object 21.

In some but not necessarily all examples, the beam of light 9 can be provided from an optical coherence tomography (OCT) arrangement, which acts as the source 17.

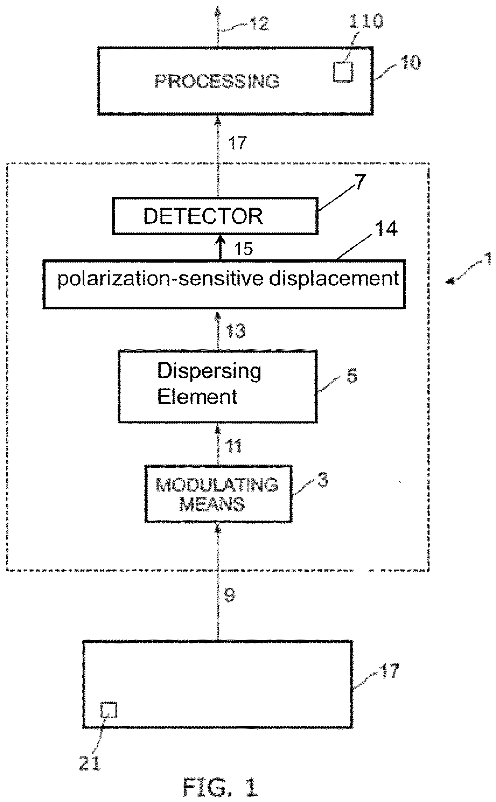

Fig. 1 schematically illustrates an example apparatus 1. The example apparatus 1 comprises spatial modulating means 3 for spatially modulating a beam of light 9 to produce a spatially modulated beam of light 11;

one or more dispersing elements 5 configured to disperse, in a dispersion direction, the spatially modulated beam of light 11 to produce a spatially modulated dispersed beam of light 13;

polarization-sensitive displacement means 14 for providing a polarization dependent displacement of the spatially modulated dispersed beam of light 13 in a direction that has at least a component orthogonal to the dispersion direction; and a detector 7 configured to detect the spatially modulated, dispersed and displaced beam of light 15.

The spatial modulating means 3 can, in some examples, comprise one or more spatial modulators. An example of a spatial modulator 3 is a spatially coded aperture.

In the example of Fig. 1, a spatial modulator 3 is arranged within the apparatus 1 so that when the apparatus 1 is coupled to the source of the input beam of light 9, the input beam of light 9 is incident, at least in part, upon the spatial modulator 3.

The spatial modulator 3 may selectively remove information from the input beam of light 9 so that only portions of the input beam of light 9 are detected.

The spatial modulator 3 may comprise any means which may be arranged to spatially modulate the input beam of light 9. The spatial modulation occurs over a transverse cross-sectional area of the input beam of light 9. The modulation comprises amplitude modulation that varies in dependence upon a location within the transverse cross-sectional area of the input beam of light 9.

In some examples the spatial modulator 3 comprises a spatially coded aperture. The spatially coded aperture provides for spatial modulation over a cross-sectional area of the input beam of light 9 that passes through the coded aperture. The coded aperture is coded to provide amplitude modulation that varies in dependence upon a location within the aperture. The coded aperture defines a fixed two-dimensional pattern of spatially varying transparency. The spatially coded aperture physically modulates the beam of light to a spatially compressed/sparse format.

The spatially coded aperture 3 may comprise a non-uniform optical mask or any other suitable type of aperture that provides amplitude modulation that varies in dependence upon a location within the aperture.

The spatially coded aperture 3 may be a two-dimensional spatially coded aperture or any other suitable type of aperture. The two-dimensional spatially coded aperture defines a two-dimensional plane. The beam of light 9 may travel in a direction normal (orthogonal) to the two-dimensional plane.

In other examples the spatial modulator 3 could comprise a liquid crystal on silicon (LCOS) modulator, a digital micromirror device (DMD) array or any other suitable type of spatial modulator 3.

The spatial modulator 3 can comprise multiple different portions that have a particular transparency. In some examples the spatial modulator 3 may comprise at least a first portion having a first level of transparency to the input beam of light 9 and at least a second portion having a second, different level of transparency to the input beam of light 9. In some examples the spatial modulator 3 may comprise at least multiple spatially distributed non-overlapping first portions, that are distributed over an area in two dimensions and have a first level of transparency to the input beam of light 9 and at least multiple spatially distributed non-overlapping second portions that are distributed over the area in two dimensions and have a second, different level of transparency to the input beam of light 9. In at least some examples, the spatially distributed first portions and the spatially distributed second portions do not overlap. The spatially distributed first portions and the spatially distributed second portions can be contiguous and, in some examples, the spatially distributed first portions and the spatially distributed second portions completely fill the area. The different levels of transparency may allow different levels of light to pass through the spatial modulator 3. In some examples the spatial modulator 3 may be a binary modulator 3 so that only two different absorbencies are provided by the respective portions of the spatial modulator 3. In other examples the spatial modulator 3 may be a grey-scale modulator and may comprise more than two different levels of transparency in the different portions of the spatial modulator 3.

The different portions of the spatial modulator 3 may be arranged in any suitable pattern. In some examples the respective portions of the spatial modulator 3 having different transparencies are pixelated and arranged in a pixelated pattern. The pixelated arrangement may have the respective portions of the spatial modulator 3 arranged in an array of columns and rows of pixels. In some examples, the pixels are square or rectangular.

The two-dimensional spatially coded aperture can comprise multiple different portions that are coded with a particular transparency. The two-dimensional spatially coded aperture can comprise at least a first plurality of portions, having a first transparency, and at least a second plurality of portions, having a second different transparency, wherein the first plurality of portions and the second plurality of portions are spatially distributed in two dimensions. The first portions and the second portions can be arranged in an array of non-overlapping pixelated portions and can be arranged in rows and columns. For example, the coded aperture can be pixelated and comprise multiple different portions (pixels) that are arranged as an array in rows and columns, where the pixels are coded with a particular transparency. The two-dimensional pattern of pixels (portions) that have a first transparency is different to the two-dimensional pattern of pixels (portions) that have a second transparency, different to the first transparency.

The transparency at each pixel defines a fixed two-dimensional pattern of spatially varying transparency. In some examples, the transparency at each pixel in a row defines a fixed one-dimensional pattern of spatially varying transparency that does not repeat or does not repeat within a minimum number of columns. In some examples, the transparency at each pixel in a column defines a fixed one-dimensional pattern of spatially varying transparency that does not repeat or does not repeat within a minimum number of rows. In some examples, the transparency at each pixel defines a fixed two-dimensional pattern of spatially varying transparency that has a random or pseudorandom spatial distribution. In some examples, the pixels are coded as either opaque or transparent. In other examples, the pixels are coded using grey scale.

The size p of the pixels when projected onto a detector 7, can be directly proportional to a size d of pixels of the detector 7.

The number of transparent pixels, partially transparent pixels, and opaque pixels in a spatially coded aperture 3 can vary in different implementations of the disclosure. In some examples approximately half of the pixels of the modulator could be absorbent so that half of the incident area of the modulator acts to block the input beam of light 9 while the other half allows the incident beam of light to pass, or partially pass through in a spatially-coded format.

In some examples the different portions (e.g. pixels) of the spatial modulator 3 may be arranged in a random pattern (which encompasses pseudo random patterns) that is random in two dimensions. The random pattern may be an irregular pattern. The random pattern might not be defined or arranged in relation to any specific object. In other examples the respective portions (e.g. pixels) of the spatial modulator 3 may be arranged in a predetermined pattern.

The predetermined pattern may be selected according to the source 17 of the broadband beam of light 9. It can for example be selected according to the object 21 or type of object that is to be imaged, for example, by an OCT arrangement.

In some examples the spatial modulator 3 may be fixed in position relative to the other components of the apparatus 1. In other examples the spatial modulator 3 may be arranged to be moveable between imaging measurements relative to the other components of the apparatus 1. In particular the spatial modulator 3 may be moveable so that the spatial modulator 3 can be shifted relative to the dispersing element 5.

In some examples the transparency of the portions of the spatial modulator 3 may be wavelength dependent. In such examples the modulation of the input beam of light 9 by the respective portions of the spatial modulator 3 will be dependent upon the wavelengths within the input beam of light 9.

The spatial modulator 3 provides a spatially modulated beam of light 11 as an output.

The spatially coded aperture can be a fixed spatially coded aperture that remains fixed during integration time of detector 7.

The dispersing element 5 for dispersing the spatially modulated beam of light 11 is arranged within the apparatus 1 so that the spatially modulated beam of light 11, or at least part of the spatially modulated beam of light 11, provided by the spatial modulator 3 is incident upon the dispersing element 5. Dispersion converts a spectral difference (a difference in wavelength of the light) into a spatial offset.

There can, in some examples, be one or more dispersing elements 5.

The dispersing element 5 is configured to cause a wavelength dependent spatial shift of the same fixed spatially coded aperture, defined by the spatial modulator 3. In at least some examples the spatial shift is only in the plane of the aperture/beam (2D dispersion). In at least some examples, the spatial shift is only in one dimension (1D dispersion). That one dimension can be aligned with a row (or a column) of pixels in the spatially coded aperture and/or pixels of the detector 7.

The dispersing element 5 is configured to disperse the spatially modulated beam of light 11. There can be one or more dispersing elements 5. The dispersing elements 5 may comprise any elements which cause different wavelengths of the spatially modulated beam of light 11 to be dispersed by different amounts. The one or more dispersing elements 5 may comprise a refractive element, for example a prism, or a diffractive element, for example a grating, which can be a transmissive diffraction grating or a reflective diffraction grating or any other suitable elements.

The dispersing element 5 can be a prism or a combination of prisms. A prism is a polyhedron with two faces parallel, and with surface normals of the other faces lying in the same plane.

The or each prism can be a triangular prism. The triangular prism can have a constant triangular cross-section that has a shape of an isosceles triangle or an equilateral triangle.

The dispersing element 5 provides a spatially modulated dispersed beam of light 13 as an output.

The polarization-sensitive displacement means can, for example, comprise a polarization-sensitive displacement element 14 that is distinct from the dispersing element 5.

The polarization-sensitive displacement means 14 (e.g. the polarization-sensitive displacement element) is arranged within the apparatus 1 so that the spatially modulated, dispersed beam of light 13, or at least part of the spatially modulated, dispersed beam of light 13, provided by the dispersing element 5 is incident upon the polarization-sensitive displacement means 14 (e.g. the polarization-sensitive displacement element).

The polarization-sensitive displacement means 14 (e.g. the polarization-sensitive displacement element) provides a polarization dependent displacement of the spatially modulated, dispersed beam of light 13 in a direction that has at least a component orthogonal to the dispersion direction.

In some but not necessarily all examples, the polarization-sensitive displacement means 14 (e.g. the polarization-sensitive displacement element) can be distinct from the dispersing element 5. The polarization-sensitive displacement means 5 (e.g. the polarization-sensitive displacement element) can be positioned between the dispersing element 5 and the detector 7.

The polarization-sensitive displacement element 14 can be a single (sole) polarization-sensitive displacement element 14 in the apparatus.

In some but not necessarily all examples, the polarization-sensitive displacement means 14 (e.g. the polarization-sensitive displacement element) is configured to cause relative displacement of orthogonal linear polarization states of the spatially modulated, dispersed beam of light 13 in the direction that has at least a component orthogonal to the dispersion direction.

The relative displacement in a direction orthogonal to the dispersion direction, at the detector 7, can be at least a pixel spacing of the detector 7 in the direction orthogonal to the dispersion direction. The relative displacement in the direction orthogonal to the dispersion direction, at the detector 7, can be a whole number of pixel spacings of the detector 7 in the direction orthogonal to the dispersion direction.

In some but not necessarily all examples, the polarization-sensitive displacement means 14 (e.g. the polarization-sensitive displacement element) is configured to cause, for one linear polarization state but not another orthogonal linear polarization state, displacement of the dispersed beam of light 13 in a direction that has at least a component orthogonal to the dispersion direction.

In some but not necessarily all examples, the polarization-sensitive displacement means 14 (e.g. the polarization-sensitive displacement element) comprises a birefringent crystal. In some but not necessarily all examples, the polarization-sensitive displacement means 14 (e.g. the polarization-sensitive displacement element) comprises a combination of prism and a polarization beamsplitter.

The polarization-sensitive displacement means 14 (e.g. the polarization-sensitive displacement element) provides a spatially modulated dispersed and displaced beam of light 15 as an output.

The detector 7 is configured to detect the spatially modulated, dispersed and displaced beam of light 15. The detector 7 is arranged within the apparatus 1 so that the spatially modulated, dispersed and displaced beam of light 15, or at least part of the spatially modulated, dispersed and displaced beam of light 15, is incident on the detector 7 for detecting the spatially modulated, dispersed and displaced beam of light 15.

The detector 7 can be arranged to transduce an incident beam of light into an electrical output signal 17. In some examples the detector 7 may comprise a charge-coupled device, complementary metal-oxide semiconductor (CMOS) sensors or any other suitable type of sensors.

In some examples the detector 7 may comprise a two-dimensional array of sensors (pixels).

The beam of light 9 used during measurement has a broad spectrum (it is broadband). It comprises light that has a broad frequency spectrum. The broadband beam of light 9 can, for example, comprise light that has wavelengths that differ by over 20nm. The broadband beam of light 9 can, for example, comprise light that has wavelengths that differ by between 20nm and 50nm.

The bandwidth of the beam of light corresponds, through the dispersing element 5, to a maximal spatial shift in the dispersion direction between spatially coded aperture patterns for different wavelengths. In at least some examples, the pattern of the spatially coded aperture does not repeat in the direction of the spatial shift for at least a distance corresponding to the maximal spatial shift.

The polarisation states of the beam of light corresponds, through the polarization-sensitive displacement element 14, to a maximal spatial shift in a direction orthogonal to the dispersion direction between spatially coded aperture patterns for different polarizations states. In at least some examples, the pattern of the spatially coded aperture does not repeat in the direction of the spatial shift for at least a distance corresponding to the maximal spatial shift.

The spatially modulated beam of light 11 is a four-dimensional data cube $[x, y, \lambda, p]$ with a two-dimensional slice $[x, y]$ for each wavelength-polarization channel $[\lambda, p]$ coded by the same fixed spatially coded aperture 3 that has variable transparency in the x-y plane.

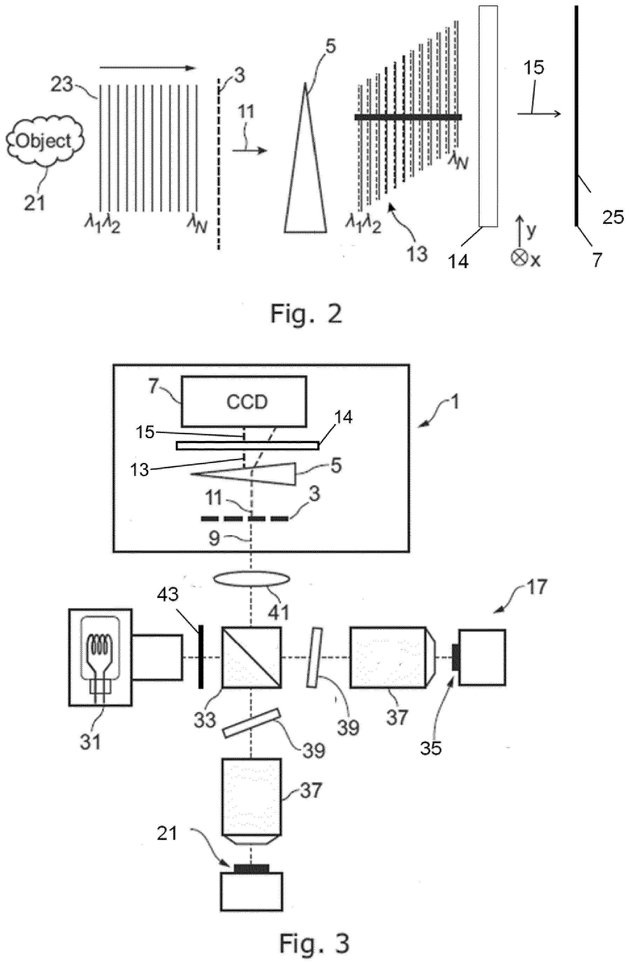

The spatially modulated dispersed beam of light 13 represents, for each polarization state p, a skewed version of the three-dimensional data cube. The skew (offset), caused by the dispersing element 5, is within the x-y plane and is proportional to wavelength. In the example illustrated in Fig. 2 it is in the y-direction only. Each spatially coded two-dimensional slice $[x, y]$ for each wavelength channel n is shifted (offset) $y_n$.

The polarization-sensitive displacement element 14 provides a relative offset between the skewed versions of the three-dimensional data cube for each polarization state p. The skew (offset), caused by the polarization-sensitive displacement element 14, is within the x-y plane and is dependent upon polarization state p. In the example illustrated in Fig. 2 it is in the x-direction only. Each spatially coded two-dimensional slice $[x, y]$ for each polarization state p is shifted (offset) $x_p$.

The dispersing element 5 and the polarization-sensitive displacement element 14, in combination, cause each spatially coded two-dimensional slice $[x, y]$ for each pair of wavelength channel n and polarization state p to be shifted $(x_p, y_n)$. There is both a polarimetric shift $x_p$ and a spectral shift $y_n$ on the detector plane.

The detector 7 detects the superposition of the offset spatially coded two-dimensional slices $[x, y]$ for each pair of wavelength channel n and polarization state p. This reduces the four-dimensional data cube $[x, y, \lambda, p]$ to a two-dimensional projection in a single shot. It collapses overlapping differently masked spectrograms for different channels to a single spectrogram. The differently masked spectrograms are incoherent.

In other examples the detector 7 may comprise a linear detector which may be scanned across a detecting plane.

Where the broadband beam of light 9 has been reflected from or has passed through a scene or an object 21, then the output signal 17 provided by the detector 7 comprises information indicative of the scene or object 21. In some but not necessarily all examples, the processing means 10 uses the output signal 17 to provide a spectral image of the scene or object 21.

Where the source 17 of the broadband beam of light 9 is an optical coherence tomography (OCT) arrangement, the output signal 17 provided by the detector 7 comprises information indicative of the object 21 which can, for example, be a three-dimensional object imaged by the OCT arrangement 17.

In some but not necessarily all examples, the processing means 10 processes the output signal 17, for example using non-linear optimization, to produce a three-dimensional image of the object 21. This produced three-dimensional image can be rendered on a display or other suitable user output device.

The processing means 10 can be a part of the apparatus 1 or, as shown in Fig. 1, separate from the apparatus 1. In some examples, the processing means 10 is remote from the apparatus 1. The processing means 10 can comprise a processor or controller and memory. The processing means 10 can comprise load and use a computer program 110 stored in the memory to perform its functions.

Fig. 2 shows the compressive sensing principle of examples of the disclosure.

In the example of Fig. 2, the object 21 reflects linearly polarized broadband light which has been directed onto the object 21. Different wavelengths/polarizations of the incident light are reflected differently depending upon the internal structure of the object 21. This provides a plurality of spatial images 23. Each of the spatial images 23 corresponds to a different wavelength of light $\lambda_i$ ($\lambda_1$ to $\lambda_N$). The different spatial images 23 therefore comprise information about the internal structure of the object 21. The different spatial images 23 define a four-dimensional signal [x, y, $\lambda_i$, $p_j$].

The reflected beam of light 9 is a four-dimensional data cube [x, y, $\lambda_i$, $p_j$] with a two-dimensional slice [x, y], a spatial image 23, for each combination of wavelength channel $\lambda_i$ and linear polarization state $p_j$.

In the example of Fig. 2 the spatial modulator 3 comprises a two-dimensional spatially coded aperture. Other types of modulator 3 may be used in other examples of the disclosure, for example as previously described.

The spatial images 23 in the input beam of light 9 are modulated by the spatially coded aperture 3 to produce a spatially modulated beam of light 11.

The spatially modulated beam of light 11 is a four-dimensional data cube [x, y, $\lambda_i$, $p_j$] with a two-dimensional slice [x, y] for each combination of wavelength channel $\lambda_i$ and linear polarization state $p_j$ coded by the same fixed spatially coded aperture that has variable transparency in the x-y plane.

The spatially modulated beam of light 11 provided by the spatial modulator 3 is then spread by the dispersing element 5. In the example of Fig. 2 the dispersing element 5 comprises a triangular prism. Other types of dispersing element 5 could be used in other examples of the disclosure, as previously described. In this example, the dispersing element 5 refracts the spatially modulated beam of light 11 to spatially spread the spatially modulated beam of light in the y-direction only. Different wavelengths of the spatial images 23 are spread by a different amount in the y-direction as shown schematically in Fig. 2. The distance by which a spatial image 23 is spread by the dispersing element 5 is dependent upon (e.g. proportional to) the wavelength of the spatial image 23.

The spatially modulated dispersed beam of light 13 represents a skewed version of the four-dimensional data cube. The skew (offset), caused by the dispersing element 5, is within the x-y plane and is proportional to wavelength. In the example illustrated in Fig. 2 it is in the y-direction only. Each spatially coded two-dimensional slice [x, y] for each wavelength channel i is shifted (offset) by a wavelength specific amount $y_i$ in the y-direction.

The spatially modulated dispersed beam of light 13 is then incident upon the polarization-sensitive displacement element 14. In the example of Fig. 2 the polarization-sensitive displacement element 14 comprises a birefringent crystal. Other types of polarization-sensitive displacement element 14 could be used in other examples of the disclosure. In this example, the polarization-sensitive displacement element 14 displaces the spatially modulated, dispersed beam of light 13 in the x-direction only (not illustrated in Fig. 2). Different polarizations of the spatial images 23 are relatively displaced by a different amount in the x-direction. The distance by which a spatial image 23 is shifted is dependent upon the linear polarization state of the spatial image 23.

The resulting spatially modulated, dispersed and displaced beam of light 15 represents a skewed version of the four-dimensional data cube. The skew (offset), caused by the dispersing element 5, is within the x-y plane and is proportional to wavelength. In the example illustrated in Fig. 2 it is in the y-direction only. Each spatially coded two-dimensional slice [x, y] for each wavelength channel i is shifted (offset) by a wavelength specific amount $y_i$ in the y-direction.

The skew (offset), caused by the polarization-sensitive displacement element 14, is within the x-y plane and is dependent upon polarization. In the example illustrated in Fig. 2 it is in the x-direction only (not illustrated). Each spatially coded two-dimensional slice [x, y] for each polarization channel j is shifted (offset) by a polarization specific amount $x_i$ in the x-direction.

The spatially modulated, dispersed and displaced beam of light 15 is then incident upon the detector 7. The detector 7 comprises a plurality of pixels 25. Only one pixel 25 is shown for clarity in Fig. 2. The plurality of pixels 25 may be arranged in any suitable array. In the example of Fig. 2 the plurality of pixels 25 may be arranged in a matrix array comprising rows and columns. Each pixel 25 detects the summation of the spatially modulated, dispersed and displaced beam of light 15 for each of the different combinations of wavelengths $\lambda_1$ to $\lambda_N$ and polarization states for the area covered by the pixel 25.

As the different wavelengths $\lambda_1$ to $\lambda_N$ in the beam of light 15 are shifted by different amounts the different wavelengths $\lambda_1$ to $\lambda_N$ that are incident on a given pixel of the detector 7 have passed though different (incoherent) portions of the spatial modulator 3. This means that the different wavelengths $\lambda_1$ to $\lambda_N$ that are incident on a given pixel 25 of the detector 7 may be modulated by different amounts.

As the different polarizations in the beam of light 15 are shifted by different amounts the different polarizations that are incident on a given pixel of the detector 7 have passed though different (incoherent) portions of the spatial modulator 3. This means that the different polarizations that are incident on a given pixel 25 of the detector 7 may be modulated by different amounts.

The detector 7 detects the superposition of the offset spatially coded two-dimensional slices [x, y] for each polarization-spectral channel. This reduces the four-dimensional data cube to a compressed two-dimensional projection in a single shot. It collapses overlapping differently masked spectrograms for different polarizations to a single spectrogram.

In the above examples the input beam of light 9 can be represented as $N_\lambda$ wavelength channels and $N_p$ polarization channels. Each of the combined wavelength-polarization channels has a spatial size $N_x \times N_y$.

Let the spatially modulated object 11 after the coded aperture 3 be $Z \in \mathbb{R}^{N_x \times N_y \times N_\lambda \times N_p}$, where

$$Z_k^l(i,j) = X_k^l(i,j) \odot M^l(i,j)$$

$\forall k = 1, 2 \dots N_\lambda$ $\forall l = 1, 2$ and $\odot$ denotes elementwise product in (x,y) dimensions.

There are differently coded apertures $M^1(i,j)$ and $M^2(i,j)$ for each linear polarization. One is a shifted version of the other one.

The spatially modulated object 13 after the dispersion element 5 is $\acute{Z} \in \mathbb{R}^{N_x \times (N_y \times N_\lambda - 1) \times N_\lambda \times N_p}$, where

$$\acute{Z}_k^l(i,j) = Z_k^l(i, j + g(\lambda_k - \lambda_c)) = X_k^l(i, j + g(\lambda_k - \lambda_c)) \odot M^l(i, j + g(\lambda_k - \lambda_c)) =$$

$$\acute{X}_k^l(i,j) \odot \acute{M}^l(i,j) \quad \forall k = 1, 2 \dots N_\lambda \quad \forall l = 1, 2$$

The two-dimensional detection at the detector 7 is:

$$Y = \sum_{l=1}^{N_p=2} \sum_{k=1}^{N_\lambda} \acute{Z}_k^l = \sum_{l=1}^{N_p=2} \sum_{k=1}^{N_\lambda} \acute{X}_k^l \odot \acute{M}_k^l$$

where

$$\acute{X}_k^l(i,j) = X_k^l(i, j + g(\lambda_k - \lambda_c)) \qquad \acute{X} \in \mathbb{R}^{N_x \times (N_y \times N_\lambda - 1) \times N_\lambda \times N_p}$$

$$\acute{M}_k^l(i,j) = M^l(i, j + g(\lambda_k - \lambda_c)) \qquad \acute{M} \in \mathbb{R}^{N_x \times (N_y \times N_\lambda - 1) \times N_\lambda \times N_p}$$

Vectorizing Y and X:

y= vec(Y), where $y \in \mathbb{R}^{N_x \times (N_y \times N_\lambda - 1)}$

x= vec($\acute{X}$), where $\acute{X} \in \mathbb{R}^{N_x \times (N_y \times N_\lambda - 1) \times N_\lambda \times N_p}$

Define a two-dimensional sensing matrix $\phi$ where y= $\phi$x and

$$\phi \;=\; \left\{ \left[ D_{1,1}\,, D_{1,2}\,, \ldots D_{1,N_\lambda} \right], \left[ D_{2,1}\,, D_{2,2}\,, \ldots D_{2,N_\lambda} \right] \right\}$$

*where* $D_{l,k} \;= diag(vec(\acute{M}_k^l))\;\; \forall l = 1,2$

Then solve

$$x = \arg \min_x ||y - \phi x||^2 + \tau R(x)$$

where $R(x)$ denotes the regularizer imposed on the spectral image $x$, and $\tau$ balances the two terms in equations. The regularizer R can, for example, be based upon total variation of the three-dimensional image.

In examples of the disclosure $x$ is the spectral domain signal of the beam of light 9 from the object 21. The three-dimensional spatial image r can therefore be obtained by solving

$$r = \arg \min_r ||z - \phi Fr||^2 + \tau R(r)$$

where $F$ is the Fourier transform and
where $R(r)$ denotes the regularizer imposed on the image $r$, and $\tau$ balances the two terms. The regularizer R can, for example, be based upon total variation of the three-dimensional image.

Any suitable compressive sensing inversion algorithms may be used by processing means 12 to solve the equations to obtain the desired image. For example, non-linear optimization can be used to produce a three-dimensional image of the object. The image has two spatial dimensions (x,y) and a third dimension in space (z) or wavelength ($\lambda$) forming respectively a real image that has three spatial dimensions (x,y,z) or a hyperspectral (two-dimensional) image. Where an optical coherence tomography (OCT) arrangement 17 provides the beam of light 9 from an object, the non-linear optimization can be used to produce a real three-dimensional image of the object (a real image that has three spatial dimensions).

The sparsity of the transfer function $\phi$ that represents the combination of the spatial modulating means 3, the dispersing element 5 and polarization-sensitive displacement means 14 (e.g. the polarization-sensitive displacement element) causes information compression.

In at least some examples, the dispersion direction (the direction in which light is shifted spatially by dispersion element 5), when measured at the detector 7, is aligned with rows or columns of pixels in the detector 7. Additionally or alternatively, in at least some examples, the dispersion direction (the direction in which light is shifted spatially by dispersion element 5), when measured at the detector 7 relative to a projection of the spatial modulating means 3 onto the detector 7, is aligned with rows or columns of modulating pixels in the spatially coded aperture of the spatial modulating means 3.

The polarization-sensitive displacement of the spatially modulated, dispersed beam of light 13 can be in a direction orthogonal to the dispersion direction. The direction of polarization-sensitive displacement of the spatially modulated, dispersed beam of light 13 can therefore also be aligned with columns or rows of pixels in the detector 7.

Fig. 3 illustrates an example in which the source 17 of the broadband beam of light 9 provided to the apparatus 1 is an optical coherence tomography (OCT) arrangement 17.

Optical coherence tomography (OCT) is also called low coherence light interferometry. A double path interferometer 17 comprises, for a beam of light, a sample path via an object 21 and a reference path. In this example, the double path interferometer arrangement 17 is used in a Michelson configuration to create interference between an optical beam reflected from an object 21 in the sample path and a reference optical beam in the reference path. The above described apparatus 1 can be used to detect the interference.

A double path interferometer, for example a Michelson interferometer, uses a beam splitter 33, to split light from a polarized broadband light source 31 into two beams of the same bandwidth that travel at 90 degrees to each other along different paths- a sample (object) path and a reference path . In the Michelson interferometer, each of those light beams is reflected back toward the beam splitter 33 which then combines their amplitudes using the superposition principle. The resulting interference pattern is directed to the detector 7 via spatial modulating means 3 and dispersing element 5.

In this example, a light beam is reflected back from the object 21 and the other reference light beam is reflected back from a mirror 35.

A linear polarizer 43 is positioned between the source 31 and the interferometer. It linearly polarizes the broadband light beam provided to the OCT arrangement 17. The arrangement 17 is a polarization sensitive compressive spectral optical coherence tomography (PS-CS-OCT) arrangement that uses in order a spatial modulating means 3, dispersing element 5 and polarization-sensitive displacement element 14 on the interference signal before detection of a spectrogram of overlapping differently masked spectrograms for different combinations of wavelength channels and polarization channels.

The detector 7 can detect the different wavelengths/polarizations simultaneously so that all the information is recorded in single image (one-shot operation). The apparatus 1 therefore enables $N_\lambda * N_p$ channel signals to be recovered from a single measurement. The detector 7 produces, in a single shot, without spatial or spectral scanning, spectral domain information 17 that can be used to produce a three-dimensional image of the object 21.

In this example there is full field illumination of the object 21 by a polarized light beam over an area. A reflected beam of light from the object 21 provides full field illumination of a spatially coded aperture 9 over an area. The spatially coded light provides full-field illumination of a dispersing element 5 over an area. The dispersed, spatially coded light 13 provides full field illumination of the detector 7 over an area that corresponds to an array of $N_x$ by $N_y$ pixels (sensels) in the detector 7.

The OCT arrangement 17 comprises a light source 31, a linear polarizer 43, a beam splitter 33, a static reference mirror 35, one or more microscope objectives 37, one or more compensators 39, and one or more focusing elements 41. The OCT arrangement 17 is a spectral domain arrangement. It uses a light source 31 of a fixed broad spectrum.

In examples of the disclosure the light source 31 used for measurement is a broadband light source which provides light having a range of wavelengths. The wavelength of the light that is used may depend on the type of object 21 that is to be imaged or any other suitable factor. In some examples the light used may be infrared light. in some examples the wavelength of the light used may have a range of wavelengths between 400nm and 1500nm. The "centre wavelength" can be for example at 830nm with a frequency range of 810nm to 850nm for a 40nm bandwidth or the "centre wavelength" can be 1300nm with a frequency range of 1280nm to 1320nm for a 40nm bandwidth or the "centre wavelength" can be 1500nm with a frequency range of 1480nm to 1520nm for a 40nm bandwidth. Other centre wavelengths and other bandwidths are possible.

The output light beam from the light source 31 is incident on the beam splitter 33. The beam splitter 33 may comprise a prism, a half silvered mirror or any other suitable component.

In the OCT arrangement 17 half of the split beam provides the reference beam and is provided to the static reference mirror 33. A microscope objective 37 and a compensator 39 are provided between the beam splitter 33 and the static reference mirror 35. The microscope objective 37 may comprise any means which may be arranged to focus the beam of light. In some examples the microscope objective 37 may comprise one or more lenses or any other suitable optical elements.

The other half of the split beam provides the object beam and is provided to the object 21. The object 21 may be arranged to be moved along the z axis, but not during imaging. This axis may enable the focussing of the three-dimensional images provided by the OCT arrangement 17. In the example of Fig. 3 the object 21 is provided on a motorised arrangement so as to enable movement along the z axis between one-shot measurements. In other examples a manual arrangement, or any other suitable type of arrangement, could be used.

A microscope objective 37 and a compensator 39 are provided between the beam splitter 33 and the object 21. The microscope objective 37 may comprise any means which may be arranged to focus the beam of light. In some examples the microscope objective 37 may comprise one or more lenses or any other suitable optical elements.

The different wavelengths of the light provide coherence of the object beam and the reference beam at different optical path lengths. Therefore, the different wavelengths of light provide information about different depths within the object 21. Different features within the object 21 reflect the incident light by different amounts. The interference between the reflected object beam and the reflected reference beam therefore provides information about the features within the object 21.

As the different frequencies of light provide information about different depths within the object 21 this enables three-dimensional imaging of the object 21. The three-dimensional imaging 21 may enable different features at different depths within the object to be identified and/or analysed. This ensures that the information obtained in the examples of the disclosure comprises information about the internal structure of an object 21 and not just information about the surface of the object 21.

The OCT arrangement 17 also comprises one or more focusing elements 41. The focussing element 41 may comprise a lens or any other suitable means for focusing a beam of light. The focusing element 41 is arranged to focus the input beam of light 9 into the apparatus 1 for detecting.

In some example there is provided a computer program 110 that when loaded into a computer (processing means 10) controls an apparatus 1, where the apparatus 1 comprises:

    spatial modulating means for spatially modulating a beam of light to produce a spatially modulated beam of light;
    a dispersing element configured to disperse the modulated beam of light, in a dispersion direction, to produce a spatially modulated and dispersed beam of light;
and polarization-sensitive displacement element that provides a polarization dependent displacement of the dispersed beam of light in a direction that has at least a component orthogonal to the dispersion direction
a detector configured to detect the spatially modulated, dispersed and displaced beam of light,
wherein the computer program 110 is configured to cause variation in one or more of the spatial modulating means, the dispersing element and the polarization sensitive displacement element.

The computer can, in some examples, causing relative movement of the dispersing element and the detector or control a variation in a spatially coded aperture 5.

The above examples can find application is non-destructive testing and analysis and imaging. The system can be used for material recognition, medical imaging etc. It is particularly useful where an object demonstrates birefringence. This can occur in biological tissues, e.g., muscle fibers, myelin, retina, etc. Also, industrial materials can have birefringence properties, that can vary under different conditions such as stress. Such materials include, for example, crystalline silicon, silicon carbide, sapphire, etc.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

In this brief description, reference has been made to various examples. The description of features or functions in relation to an example indicates that those features or functions are present in that example. The use of the term 'example' or "for example" or "may" in the text denotes, whether explicitly stated or not, that such features or functions are present in at least the described example, whether described as an example or not, and that they can be, but are not necessarily, present in some of or all other examples. Thus "example", "for example" or "may" refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus comprising:

   spatial modulating means for spatially modulating a beam of light to produce a spatially modulated beam of light;
   a dispersing element configured to disperse the spatially modulated beam of light, in a dispersion direction, to produce a spatially modulated and dispersed beam of light;
   polarization-sensitive displacement element configured to provide a polarization dependent displacement of the spatially modulated and dispersed beam of light in a direction that has at least a component orthogonal to the dispersion direction; and
   a detector configured to detect the spatially modulated, dispersed and displaced beam of light.

2. An apparatus as claimed in claim 1, wherein the polarization-sensitive displacement element is configured to provide polarization dependent displacement of the dispersed beam of light in a direction that has at least a component orthogonal to the dispersion direction.

3. An apparatus as claimed in claim 2, wherein the polarization-sensitive displacement element is a single polarization-sensitive displacement element configured to provide polarization dependent displacement of the dispersed beam of light in a direction that has at least a component orthogonal to the dispersion direction.

4. An apparatus as claimed in claim 1, 2 or 3, wherein the polarization-sensitive displacement element is configured to cause a relative displacement of orthogonal linear polarization states of the dispersed beam of light in the displacement direction, the relative displacement having at least a component orthogonal to the dispersion direction.

5. An apparatus as claimed in claim 4, wherein the relative displacement in a direction orthogonal to the dispersion direction is, at the detector, at least a pixel spacing of the detector in the direction orthogonal to the dispersion direction.

6. An apparatus as claimed in any of claims 1 to 4, wherein the polarization-sensitive displacement element is configured to cause, for one linear polarization state but not another orthogonal linear polarization state, displacement of the dispersed beam of light in a direction that has at least a component orthogonal to the dispersion direction.

7. An apparatus as claimed in any preceding claim, wherein the polarization-sensitive displacement element is positioned between the dispersing element and the detector.

8. An apparatus as claimed in any preceding claim, wherein the polarization-sensitive displacement element comprises a birefringent crystal.

9. An apparatus as claimed in any preceding claim, wherein the dispersion direction is aligned with rows or columns of pixels in the detector and/or the dispersion direction is aligned with rows or columns of modulating pixels in the spatial modulating means.

10. An apparatus as claimed in any preceding claim, wherein the dispersing element comprises one or more refractive elements or one or more diffractive elements.

11. An apparatus as claimed in any preceding claim, wherein the spatial modulating means comprises a two-dimensional spatially coded aperture comprising at least a first plurality of portions, having a first transparency, and at least a second plurality of portions, having a second different transparency, wherein the first plurality of portions and the second plurality of portions are spatially distributed in two dimensions.

12. An apparatus as claimed in claim 11, wherein the first portions and the second portions are arranged in an array of non-overlapping pixelated portions and are arranged in rows and columns.

13. An apparatus as claimed in any preceding claim comprising:

    a broadband light source for providing a broadband beam of light;
    a linear polarizer for polarizing the broadband beam of light to provide a beam of light for illuminating an object;
    a double path interferometer comprising, for the beam of light, a sample path via the object and a reference path;
    means for superposing a portion of the beam of light from the sample path and a portion of the beam of light from the reference path to create the beam of light for spatial modulation.

14. A system comprising the apparatus as claimed in claim 13, wherein the system or apparatus further comprises processing means for processing output of the detector to produce a three-dimensional image of the object.

15. A computer program that when loaded into a computer controls an apparatus comprising:

    spatial modulating means for spatially modulating a beam of light to produce a spatially modulated beam of light;
    a dispersing element configured to disperse the modulated beam of light, in a dispersion direction, to produce a spatially modulated and dispersed beam of light;
    and polarization-sensitive displacement element that provides a polarization dependent displacement of the dispersed beam of light in a direction that has at least a component orthogonal to the dispersion direction
    a detector configured to detect the spatially modulated, dispersed and displaced beam of light,
    wherein the computer program is configured to cause variation in one or more of the spatial modulating means, the dispersing element and the polarization sensitive displacement element.

PROCESSING — 12
110
10

17

DETECTOR — 7

15

polarization-sensitive displacement — 14

1

13

Dispersing
Element — 5

11

MODULATING
MEANS — 3

9

17

21

FIG. 1

Fig. 2

Fig. 3

Europäisches
Patentamt

European
Patent Office

Office européen
des brevets

# EUROPEAN SEARCH REPORT

Application Number

EP 20 18 7056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/366763 A1 (LIN JOSEPH HSUHUAN [US] ET AL) 21 December 2017 (2017-12-21) | 1-3, 5-12,15 | INV. G01J3/02 |
| Y | * figures 1-15 * | 13,14 | |
| A | * paragraphs [0040], [0059], [0069], [0070] - [0073] * | 4 | |
| | ----- | | |
| X | TSUNG-HAN TSAI ET AL: "Coded aperture snapshot spectral polarization imaging", APPLIED OPTICS, vol. 52, no. 10, 2 April 2013 (2013-04-02) , page 2153, XP055764194, ISSN: 1559-128X, DOI: 10.1364/AO.52.002153 | 1-12 | |
| Y | * abstract; figures 1-10 * | 13,14 | |
| A | * page 2154, right-hand column, paragraph 2 - page 2155, left-hand column, paragraph 2 * | 15 | |
| | * page 2155, left-hand column, paragraph 5 * | | |
| | * page 2156, left-hand column, paragraph 1 * | | |
| | ----- | | TECHNICAL FIELDS SEARCHED (IPC) |
| Y | EP 3 477 246 A1 (NOKIA TECHNOLOGIES OY [FI]) 1 May 2019 (2019-05-01) | 13,14 | G01J |
| A | * figures 1-7 * | 1-12,15 | G02B |
| | * paragraphs [0049] - [0064] * | | G02F |
| | ----- | | |
| A | TINGKUI MU ET AL: "Snapshot linear-Stokes imaging spectropolarimeter using division-of-focal-plane polarimetry and integral field spectroscopy", SCIENTIFIC REPORTS, vol. 7, no. 1, 13 February 2017 (2017-02-13), XP055763398, DOI: 10.1038/srep42115 * abstract; figure 1 * * page 2, paragraph 2 - paragraph 5 * | 1-15 | |
| | ----- | | |
| | -/-- | | |

The present search report has been drawn up for all claims

| Place of search | Date of completion of the search | Examiner |
|---|---|---|
| Munich | 13 January 2021 | Gangl, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

**EUROPEAN SEARCH REPORT**

Application Number

EP 20 18 7056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/009757 A1 (BODKIN ANDREW [US] ET AL) 9 January 2014 (2014-01-09)<br>* figures 9A,9B *<br>* paragraphs [0083] - [0086] *<br>----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 13 January 2021 | Gangl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 7056

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2021

| Patent document cited in search report | | Publication date | Patent family member(s) | | Publication date |
|---|---|---|---|---|---|
| US 2017366763 | A1 | 21-12-2017 | US 2017366763 A1<br>WO 2018067212 A2 | | 21-12-2017<br>12-04-2018 |
| EP 3477246 | A1 | 01-05-2019 | CN 111344533 A<br>EP 3477246 A1<br>JP 2021500575 A<br>KR 20200079279 A<br>WO 2019081807 A1 | | 26-06-2020<br>01-05-2019<br>07-01-2021<br>02-07-2020<br>02-05-2019 |
| US 2014009757 | A1 | 09-01-2014 | NONE | | |

EPO FORM P0459

For more details about this annex : see Official Journal of the European Patent Office, No. 12/82